# EUROPÄISCHE PATENTSCHRIFT

(11) **EP 1 240 975 B1**
(45) Veröffentlichungstag und Bekanntmachung des Hinweises auf die Patenterteilung: **28.12.2005**
(21) Anmeldenummer: 02004795.7
(22) Anmeldetag: 02.03.2002
(51) Int. Cl.: B23Q 7/04

(54) **Verkettetes Fertigungssystem zur Durchführung von Bearbeitungsoperationen an Teilen**
Serial production system for machining of workpieces
Système de fabrication à enchainement pour l'usinage de pièces

(30) Priorität: 12.03.2001 DE 10112169
(43) Veröffentlichungstag der Anmeldung: 18.09.2002
(60) Teilanmeldung: 04004915.7
(73) Patentinhaber: FELSOMAT GmbH & Co. KG, D-75203 Königsbach-Stein (DE)
(72) Erfinder: Jäger, Helmut F., 75203 Königsbach-Stein (DE)
(74) Vertreter: Kohler Schmid Möbus

(56) Entgegenhaltungen:
- EP-A- 0 924 584
- WO-A-86/07554
- DE-A- 3 243 335
- US-A- 5 368 539
- US-A- 5 997 452

## Beschreibung

Die Erfindung betrifft ein verkettetes Fertigungssystem zur Durchführung von Bearbeitungsoperationen an Teilen, mit mindestens einer ersten Bearbeitungsstation zur Durchführung einer ersten Bearbeitungsoperation, mit mindestens einer zweiten Bearbeitungsstation zur Durchführung einer zweiten Bearbeitungsoperation, und mit mindestens einem Portal, das zwei der Bearbeitungsstationen miteinander koppelt.

Verkettete Fertigungssysteme werden in der Serienfertigung eingesetzt, um Werkstücke auf möglichst zuverlässige und kostengünstige Weise in einer Vielzahl von Bearbeitungsstationen bearbeiten zu können. Typische Anwendungsfälle für verkettete Fertigungssysteme finden sich beispielsweise in der Automobilindustrie, z.B. für eine hoch effiziente Motoren- oder Getriebekomponentenfertigung.

Als klassisches Beispiel für ein verkettetes Fertigungssystem ist die Linienfertigung bekannt, bei der der Teilefluß zwischen einzelnen Bearbeitungsstationen über ein Band gesteuert wird, das gleichzeitig als Puffer dient. Von dem Band zweigen seitlich Portale zu einzelnen Bearbeitungsstationen ab.

Als weiteres Beispiel für ein verkettetes Fertigungssystem ist die Verkopplung einer Mehrzahl von Bearbeitungsstationen über Portale bekannt, wobei zwischen einzelnen oder mehreren Bearbeitungsstationen Bandpufferspeicher zur Entkopplung angeordnet sind. Bei derartigen Bandpufferspeichern handelt es sich um Transportbänder, mit denen einzelne Teile gefördert oder gespeichert werden. Solche Puffer nehmen in der Regel etwa 10 bis 20 Teile auf und können gewisse Schwankungen, die durch Verzögerungen an den zugeordneten Bearbeitungsstationen auftreten, auffangen.

Nachteilig ist hierbei jedoch, daß die Bandpufferspeicher nur für eine geringe Teilezahl ausgelegt sind, so daß bei größeren Störungen an einer oder mehrerer Bearbeitungseinrichtungen des Fertigungssystems das ganze System binnen Kürze zum Stillstand kommt. Außerdem wirkt sich nachteilig aus, daß bei Ausfall eines Bandes oder bei einem Transportstau an einem Band keine Ersatztransportkapazität zur Verfügung steht, wodurch die Verfügbarkeit des Gesamtsystems beeinträchtigt wird. Schließlich ist die Verwendung von Bändern aufwendig und ermöglicht nicht den direkten Transport einzelner Teile. Auch wird die Zugänglichkeit zu einzelnen Bearbeitungsstationen dadurch beeinträchtigt.

Aus der EP 0 924 584 A2 ist ein flexibles Fertigungssystem bekannt, bei dem Werkstücke auf Werkstücktransfereinheiten nacheinander zwei Bearbeitungsbänke durchfahren. Jede Bearbeitungsbank weist eine Mehrzahl von Bearbeitungsspindeln auf, die an einem gemeinsamen Maschinenbett gelagert sind. Parallel hierzu wird die Werkstücktransfereinheit gesteuert verfahren und die Werkstücktransfereinheit bewegt das jeweilige werkstück relativ zu den feststehenden Spindeln, um daran Bearbeitungsvorgänge auszuführen. Die Werkstücktransfereinheiten werden in der Maschinenbank mit einem Werkstück bestückt, durchlaufen die erste Maschinenbank und werden anschließend auf ein spurgebundenes Flurförderfahrzeug übertragen. Von diesem werden die Werkstücktransfereinheiten auf die zweite Bearbeitungsbank übergeben. An deren Ende wird das bearbeitete Werkstück auf einen Übergabetisch übergeben, von dem das bearbeitete Werkstück mittels eines Portalroboters abgeholt wird. Derselbe Portalroboter dient auch zur Übergabe von zu bearbeitenden Werkstücken auf einen Übergabetisch der ersten Maschinenbank.

Der Erfindung liegt somit die Aufgabe zugrunde, ein verbessertes verkettetes Fertigungssystem zur Durchführung von Bearbeitungsoperationen an Teilen anzugeben, das einen schnellen Transport von Teilen zu den jeweiligen Bearbeitungsstationen erlaubt, und eine möglichst hohe Verfügbarkeit und Ausfallsicherheit bei kurzen Durchlaufzeiten des Gesamtsystems bei niedrigen Kosten gewährleistet.

Diese Aufgabe wird durch ein verkettetes Fertigungssystem zur Durchführung von Bearbeitungsoperationen an Teilen gelöst, mit mindestens einer ersten Bearbeitungsstation zur Durchführung einer ersten Bearbeitungsoperation, mit mindestens einer zweiten Bearbeitungsstation zur Durchführung einer zweiten Bearbeitungsoperation, mit mindestens einem ersten Portal (Logistikportal), das sich in einer ersten Richtung (Y-Richtung) erstreckt und mindestens eine erste und eine zweite Bearbeitungsstation miteinander koppelt, mit mindestens einem zweiten Portal (Handhabungsportal), das sich quer zur ersten Richtung in einer zweiten Richtung (X-Richtung) erstreckt und eine Mehrzahl der ersten oder zweiten Bearbeitungsstationen miteinander koppelt, wobei zumindest jedem Handhabungsportal eine Speicherablage mit mehreren Ablageplätzen (48) zur Aufnahme von Teilen zugeordnet ist, wobei auf dem Handhabungsportal ein Schlitten verfahrbar ist, der eine zumindest in Vertikalrichtung (Z-Richtung) verfahrbare Greifeinrichtung aufweist, die zumindest eine zusätzliche Handhabungsoperation, wie etwa Verschieben in Y-Richtung oder Verdrehen, erlaubt, so dass die Ablageplätze der Speicherablage vom Handhabungsportal angefahren werden können, und wobei auf den Logistikportalen ein weiterer Schlitten verfahrbar ist, der mit einer Greifeinrichtung zum Aufnehmen oder Ablegen von Teilen zur Bewegung der Teile in Z-Richtung ausgebildet ist.

Die Aufgabe der Erfindung wird auf diese Weise vollkommen gelöst.

Durch die Kombination von Logistikportalen, die nachfolgende Bearbeitungsstationen koppeln, an denen unterschiedliche Bearbeitungsoperationen durchgeführt werden, mit Handhabungsportalen, die sich in einer Richtung quer zu den Logistikportalen erstrecken und eine Mehrzahl von Bearbeitungsstationen miteinander koppeln, wird in Verbindung mit den den Handhabungsportalen zugeordneten Speicherablagen zur Aufnahme von Teilen eine hohe Variabilität und eine netzartige Struktur ermöglicht. Dies ermöglicht einen Teilefluß sowohl von einer ersten Bearbeitungsstation zu einer zweiten, nachgeordneten Bearbeitungsstation, an der eine andere Bearbeitungsoperation durchgeführt wird, als auch eine schnelle Verteilung von Teilen zwischen benachbarten Bearbeitungsstationen, die die gleiche Bearbeitungsoperation durchführen können. Durch die zusätzliche Verwendung von Speicherablagen, die jeweils einem Handhabungsportal zugeordnet sind, wird gleichzeitig eine ausreichende Pufferkapazität zum Ausgleich von betriebsbedingten Schwankungen oder Störungen bereitgestellt, wobei durch die Kopplung von aufeinanderfolgenden Bearbeitungsstationen für unterschiedliche Bearbeitungsoperationen einerseits und die Kopplung von Bearbeitungsstationen, die die gleiche Bearbeitungsoperation parallel zu benachbarten Bearbeitungsstationen durchführen können, andererseits eine äußerst hohe Flexibilität des Gesamtsystems gewährleistet und so die Ausfallsicherheit des Gesamtsystems deutlich erhöht wird.

Im Gegensatz zu über Bänder miteinander verkoppelten Systemen ermöglicht die Verkopplung des Gesamtsystems sowohl in Richtung des Hauptteileflusses als auch in Querrichtung dazu über Portale einen schnellen Austausch von Teilen zwischen verschiedenen Bearbeitungsstationen, so daß bei Ausfall einzelner Bearbeitungsstationen die betreffenden Bearbeitungsoperationen von anderen Bearbeitungsstationen übernommen werden können, ohne daß der Wirkungsgrad des Gesamtsystems dadurch merklich beeinflußt wird. So können Parallelkapazitäten sowohl in Richtung des Teileflusses als auch in Querrichtung dazu vorgehalten und auf effektive Weise genutzt werden. Auch werden sogenannte Verkettungsverluste vermieden, die bei herkömmlichen Systemen auftreten, wenn verschiedene Bearbeitungsstationen durch verschiedene Einrichtungen verkoppelt werden. Dadurch, daß die Logistikportale lediglich Schlitten aufweisen müssen, die zur Bewegung der Teile in Z-Richtung ausgebildet sind und eine Greifoperation zum Aufnehmen oder Ablegen von Teilen ermöglichen, werden die Gesamtkosten des Fertigungssystems deutlich vermindert. Notwendige zusätzliche Handhabungsoperationen können von den Handhabungsportalen in Verbindung mit den Speicherablagen geleistet werden, da an den Handhabungsportalen Schlitten mit aufwendiger ausgebildeten Handhabungseinrichtungen vorgesehen sein können. Die Schlitten an den Handhabungsportalen erlauben zumindest ein Verfahren in Vertikalrichtung und eine zusätzliche Handhabungsoperation, wie etwa ein Verschieben in Y-Richtung oder ein Verdrehen um eine oder mehrere Achsen, sowie eine Greifoperation. Somit können komplexere Handhabungsaufgaben von den Handhabungsportalen erledigt werden, während der einfache Transport von Teilen zum Be- und Entladen einzelner Bearbeitungsstationen und zum Speichern von Teilen in den Speicherablagen durch einfacher aufgebaute Logistikportale auf kostengünstige Weise erledigt werden kann.

In vorteilhafter Weiterbildung der Erfindung ist eine Mehrzahl von Handhabungsportalen und Logistikportalen vorgesehen, die sich jeweils in Kreuzungspunkten miteinander kreuzen, wobei jedem Kreuzungspunkt eine Speicherablage zugeordnet ist.

Durch diese Maßnahme wird eine zusätzliche Redundanz in das Fertigungssystem eingeführt, da somit ein sowohl in Richtung des Hauptteileflusses als auch in Querrichtung dazu verkettetes Gesamtsystem erreicht wird, das als netzartige Struktur ausgebildet ist, das an den Netzwerkknotenpunkten Speicherablagen besitzt und somit eine äußerst hohe Flexibilität gewährleistet.

Ein derartiges System zeichnet sich durch einen besonders einfachen Aufbau bei gleichzeitig hoher Flexibilität und äußerst günstiger Ausnutzung der von dem Fertigungssystem eingenommenen Fläche aus.

In weiterer vorteilhafter Ausgestaltung der Erfindung sind in den Speicherablagen Zusatzeinrichtungen, wie etwa Reinigungseinrichtungen, Positioniereinrichtungen, Abblaseinrichtungen, Wascheinrichtungen, Signiereinrichtungen o. dgl. vorgesehen, mit denen die Greifeinrichtungen an den Schlitten der Handhabungsportale zur Durchführung von Handhabungsoperationen zusammenwirken.

Auf diese Weise werden zusätzliche Handhabungszellen, in denen solche Handhabungsoperationen durchgeführt werden, entbehrlich. Zusätzliche Transporteinrichtungen innerhalb solcher Handhabungsvorrichtungen, die herkömmlicherweise notwendig sind, werden überflüssig, da diese Transportfunktionen von den an den Schlitten der Handhabungsportale vorgesehenen Greifeinrichtungen mit übernommen werden können. Die an den verfahrbaren Schlitten der Handhabungsportale vorgesehenen Greifeinrichtungen können dabei gleichzeitig mit den Zusatzeinrichtungen derart zusammenwirken, daß bei üblichen Handhabungsvorrichtungen notwendige zusätzliche Transportmittel weitgehend überflüssig werden.

In vorteilhafter Weiterbildung der Erfindung sind die auf den Logistikportalen verfahrbaren Schlitten und Greifeinrichtungen lediglich zum Verfahren der Teile entlang der Logistikportale und zur Bewegung der Teile in Vertikalrichtung, sowie zur Übergabe von Teilen ausgebildet.

Auf diese Weise werden die Logistikportale lediglich zum Transport von Teilen zwischen Bearbeitungsstationen und zum Verfahren in Vertikalrichtung, sowie zum Aufnehmen und Absetzen der Teile ausgebildet, wodurch zum einen die Kosten deutlich reduziert werden können und zum anderen besonders geeignete Antriebssysteme verwendet werden können, die eine besonders hohe Fördergeschwindigkeit und Verfügbarkeit erlauben.

Gemäß einer Weiterbildung dieser Ausführung sind auf mindestens einem Logistikportal eine Mehrzahl von gesteuert verfahrbaren Schlitten angeordnet, von denen zumindest zwei benachbarte Schlitten über Streben mit einer Gelenkverbindung gekoppelt sind, an der eine Greifeinrichtung aufgenommen ist.

Durch diese Maßnahme läßt sich ein besonders schneller Transport der Teile sowohl in Horizontalrichtung als auch in Vertikalrichtung auf besonders kostengünstige Weise ermöglichen.

Eine besonders schnelle Verfahrbarkeit bei gleichzeitiger Reduzierung der Massen wird dann erreicht, wenn die Schlitten als Läufer eines Direktantriebs ausgebildet sind, dessen Induktorkamm am Logistikportal vorgesehen ist.

Hierbei muß das Logistikportal lediglich einen Horizontalträger aufweisen, an dem der Induktorkamm aufgenommen ist, der gleichzeitig als Führung ausgebildet ist, auf dem die Schlitten geführt sind.

Hiermit ergibt sich eine äußerst hohe Transportgeschwindigkeit der Teile bei gleichzeitig vereinfachtem Aufbau.

Zusätzlich können derartige Logistikportale vorzugsweise mit einer Auffangwanne für Flüssigkeiten versehen sein, um so die Verschleppung von Kühlschmiermittel beim Transport zwischen einzelnen Bearbeitungsstationen und Speicherablagen zu vermeiden. Die Logistikportale sind hierbei vorzugsweise auf Vertikalstreben entweder von unten aus abgestützt oder von oben an einer geeigneten Deckenkonstruktion aufgehängt, so daß der Transport von Teilen entlang der Logistikportale den übrigen Raum innerhalb des Fertigungssystems praktisch nicht beeinträchtigt und die betreffenden Bearbeitungsstationen von oben be- und entladen werden können.

Durch die besondere Konstruktion der verwendeten Logistikportale wird die notwendige Bauhöhe erheblich reduziert, da zusätzliche Führungen in Vertikalrichtung vollständig entfallen.

Gemäß einer weiteren Variante der Erfindung sind die Logistikportale in eine Mehrzahl von Einzelabschnitten unterteilt, die jeweils in den Speicherablagen enden, wobei innerhalb der Speicherablagen jeweils eine Transporteinrichtung zum Transport von Teilen zwischen den jeweiligen Endabschnitten eines Logistikportals vorgesehen ist.

Diese Ausführung hat den Vorteil, daß die Transportvorgänge zwischen den Handhabungsportalen und den Logistikportalen voneinander entkoppelt sind, so daß keine besonderen Maßnahmen zur Vermeidung von Kollisionen notwendig sind. Dabei wird durch die Transporteinrichtungen innerhalb der Speicherablagen der ungehinderte Transport von Teilen entlang der Logistikportale sichergestellt. Des weiteren besteht die Möglichkeit, die Logistikportale und Handhabungsportale etwa auf der gleichen Arbeitshöhe zu führen, so daß unnötig große Vertikalhübe an den Logistikportalen und an den Handhabungsportalen vermieden werden.

In vorteilhafter Weiterbildung dieser Ausführung ist zwischen den jeweiligen Endabschnitten eines Logistikportals innerhalb der Speicherablage ein Schieber zum Transport von Teilen vorgesehen.

Auf diese Weise wird mit besonders einfachen Mitteln der Transport zwischen den Endabschnitten sichergestellt.

Vorzugsweise weist das Logistikportal eine Horizontalführung auf, die an einer Vertikalverstrebung aufgenommen ist und auf der eine Mehrzahl von Schlitten gesteuert verfahrbar ist, wobei zumindest zwei benachbarte Schlitten über Streben mit einer Gelenkverbindung gekoppelt sind, an der eine Greifeinrichtung zur Handhabung eines Teils aufgenommen ist.

Durch die Verwendung eines derartigen Portals, das ein äußerst schnelles Verfahren von Teilen sowohl in Erstreckungsrichtung des Portals als auch in Vertikalrichtung erlaubt, läßt sich das gesamte Fertigungssystem erheblich kostengünstiger und platzsparender bei gleichzeitig verbesserter Durchlaufgeschwindigkeit von Teilen durch das Gesamtsystem gestalten.

Wie vorstehend bereits ausgeführt, sind hierbei die Schlitten vorzugsweise als Läufer eines Direktantriebs ausgebildet, dessen Induktorkamm am Portal vorgesehen ist, wobei der Induktorkamm gleichzeitig als Führung für die Schlitten ausgeführt sein kann und zusätzlich eine Auffangwanne unterhalb des Portals vorgesehen sein kann.

Es versteht sich, daß die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: einen Ausschnitt aus einem erfindungsgemäßen verketteten Fertigungssystem in stark vereinfachter, schematischer Darstellung;
- Fig. 2: eine vergrößerte Darstellung einer Speicherablage gemäß Fig. 1 in schematischer Darstellung, wobei lediglich eine Mehrzahl von Ablageplätzen für einzelne Teile angedeutet ist;
- Fig. 3: eine Längsansicht einer Speicherablage, die als geschlossene Zelle ausgeführt sein kann und durch die ein Handhabungsportal verläuft, wobei ferner ein quer dazu verlaufendes Logistikportal angedeutet ist;
- Fig. 4: eine Längsansicht eines Logistikportals in schematischer Darstellung;
- Fig. 5: eine vergrößerte Ansicht auf die Stirnfläche eines Logistikportals im Bereich des Horizontalträgers mit einer zugehörigen Wanne, in stark vereinfachter Darstellung; und
- Fig. 6: einen Ausschnitt aus einer Abwandlung des Fertigungssystems gemäß Fig. 1.

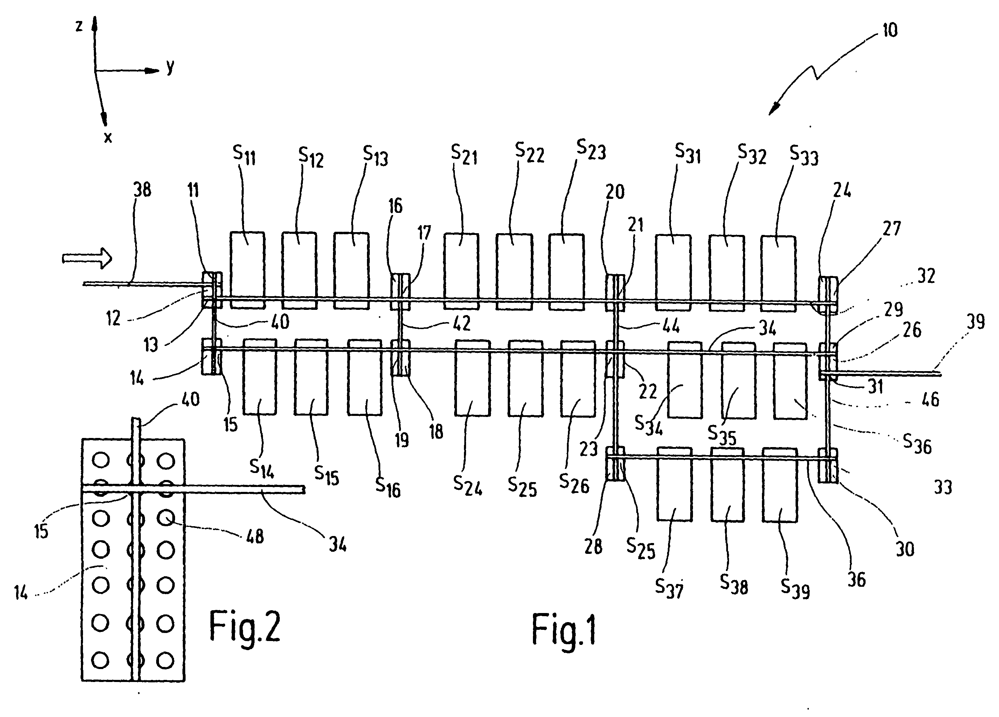

In Fig. 1 ist ein verkettetes Fertigungssystem gemäß der Erfindung äußerst schematisch dargestellt und insgesamt mit der Ziffer 10 bezeichnet.

Das Fertigungssystem 10 umfaßt sechs Bearbeitungsstationen S₁₁, S₁₂, S₁₃, S₁₄, S₁₅, S₁₆, die eine erste Bearbeitungsoperation durchführen, sechs Bearbeitungsstationen S₂₁, S₂₂, S₂₃, S₂₄, S₂₅, S₂₆, die eine zweite, nachgeordnete Bearbeitungsoperation ausführen, sowie neun Bearbeitungsstationen S₃₁, S₃₂, S₃₃, S₃₄, S₃₅, S₃₆, S₃₇, S₃₈, S₃₉, die eine dritte, nachfolgende Bearbeitungsoperation ausführen.

Ein sich in Richtung des Hauptteileflusses (Y-Richtung) erstreckendes erstes Portal 32, das im folgenden als Logistikportal bezeichnet wird, verbindet eine erste Speicherablage 12, in der eine Mehrzahl von Teilen abgelegt werden kann, mit jeweils drei nacheinander angeordneten Bearbeitungsstationen, S₁₁, S₁₂, S₁₃, die die erste Bearbeitungsoperation ausführen, mit einer Speicherablage 16, mit drei nachgeordneten Bearbeitungsstationen S₂₁, S₂₂, S₂₃, die die zweite Bearbeitungsoperation ausführen, mit einer Speicherablage 20, sowie drei Bearbeitungsstationen S₃₁, S₃₂, S₃₃, die eine dritte Bearbeitungsoperation ausführen, und mit einer sich daran anschließenden Speicherablage 24.

Ein weiteres Logistikportal 34, das parallel zum Logistikportal 32 verläuft, verbindet eine weitere Speicherablage 14, mit drei Bearbeitungsstationen S₁₄, S₁₅, S₁₆, die die erste Bearbeitungsoperation ausführen, mit einer weiteren Speicherablage 18, sowie mit drei Bearbeitungsstationen S₂₄, S₂₅, S₂₆, die die zweite Bearbeitungsoperation ausführen, mit einer weiteren Speicherablage 22, mit drei weiteren Bearbeitungsstationen S₃₄, S₃₅, S₃₆, die die dritte Bearbeitungsoperation ausführen, und mit einer weiteren Speicherablage 26.

Ein drittes Logistikportal 36, das sich parallel zu dem zweiten Logistikportal 34 erstreckt, verbindet eine weitere Speicherablage 28 mit drei Bearbeitungsstationen S₃₇, S₃₈, S₃₉, die die dritte Bearbeitungsoperation ausführen, und mit einer weiteren Speicherablage 30.

Die beiden Speicherablagen 12, 14, die über die Logistikportale 32, 34 mit jeweils drei Bearbeitungsstationen S₁₁, S₁₂, S₁₃ bzw. S₁₄, S₁₅, S₁₆ für die erste Bearbeitungsoperation gekoppelt sind, sind untereinander durch ein sich quer zu den Logistikportalen 32, 34 in X-Richtung erstreckendes zweites Portal 40, das im folgenden als Handhabungsportal bezeichnet ist, verbunden.

In entsprechender Weise sind die nachfolgenden Speicherablagen 16, 18 bzw. 20, 22 und 24, 26 durch jeweils ein weiteres Handhabungsportal 42 bzw. 44 bzw. 46 miteinander verbunden. Das Handhabungsportal, das die Speicherablage 20 und die Speicherablage 22 miteinander verbindet, ist weiter bis zur Speicherablage 28 fortgeführt, so daß drei Kreuzungspunkte 21, 23, 25 des Handhabungsportals 44 mit den Logistikportalen 32, 34, 36 entstehen, an denen jeweils eine Speicherablage 20, 22, 28 vorgesehen ist.

Gleichermaßen sind die Speicherablagen 24, 26 und 30 über das Handhabungsportal 46 verbunden, so daß das Handhabungsportal 46 drei Kreuzungspunkte 27, 29, 33 mit den Logistikportalen 32, 34, 36 bildet, an denen jeweils eine Speicherablage 24, 26, 30 vorgesehen ist.

Zur Beschickung der Speicherablagen 12, 14 bzw. der Bearbeitungsstationen S₁₁ bis S₁₆ für die erste Bearbeitungsoperation kann beispielsweise ein weiteres Logistikportal 38 vorgesehen sein, wie in Fig. 1 angedeutet ist.

Gleichfalls kann zum weiteren Transport von Teilen aus den Speicherablagen 24, 26, 30 bzw. den Bearbeitungsstationen S₃₁ bis S₃₉ für die dritte Bearbeitungsoperation zu einer nachgeordneten Station des Fertigungssystems ein weiteres Logistikportal 39 vorgesehen sein, das beispielsweise an die Speicherablage 26 angekoppelt ist und mit dem Handhabungsportal 46 einen weiteren Kreuzungspunkt 31 bildet.

In entsprechender Weise kann das Logistikportal 38 an die erste Speicherablage 12 angekoppelt sein, so daß an der Speicherablage 12 ein weiterer Kreuzungspunkt 11 mit dem Handhabungsportal 40 entsteht.

Es versteht sich, daß die Versorgung am Eingang des Fertigungssystems an den Speicherablagen 12 bzw. 14 und am Ausgang des Fertigungssystems an den Speicherablagen 24, 26, 30 auch auf andere Weise erfolgen kann.

Die Bearbeitungsstationen S₁₁ bis S₁₆ für die erste Bearbeitungsoperation sind durch die beiden Logistikportale 32, 34 und die jeweils an Kreuzungspunkten 13, 15, 17, 19 mit den Handhabungsportalen 40, 42 vorgesehenen Speicherablagen 12, 14, 16, 18 sowohl in Y-Richtung als auch in X-Richtung redundant miteinander verkoppelt.

Gleichermaßen sind die Bearbeitungsstationen S₂₁ bis S₂₆ für die zweite Bearbeitungsoperation über die Logistikportale 32, 34, an deren Kreuzungspunkten 17, 19, 21, 23 mit den Handhabungsportalen 42, 44 die Speicherablagen 16, 18, 20, 22 vorgesehen sind, sowohl in Y-Richtung als auch in X-Richtung redundant miteinander verkoppelt.

Schließlich sind auch die Bearbeitungsstationen S₃₁ bis S₃₉ für die dritte Bearbeitungsoperation über die Logistikportale 32, 34, 36, an deren Kreuzungspunkten 21, 23, 25, 27, 29, 33 mit den Handhabungsportalen 44, 46 die Speicherablagen 20, 22, 28, 24, 26, 30 vorgesehen sind, sowohl in Y-Richtung als auch in X-Richtung redundant miteinander verkoppelt.

Insgesamt entsteht auf diese Weise ein netzartiges System, durch das sichergestellt ist, daß Verzögerungen, die durch Ausfall einzelner Bearbeitungsstationen oder durch Staus auf einzelnen Portalen auftreten, jeweils durch einen anderen Weg umgangen werden können. Auf diese Weise ermöglicht das Fertigungssystem 10 höchstmögliche Flexibilität bei gleichzeitig geringem Platzbedarf und schnellen Durchlaufzeiten.

Grundsätzlich wäre es natürlich möglich, die Speicherablagen 12, 14, 18, 20, 22, 24, 26, 28, 30 mit eigenen Transport- bzw. Handhabungssystemen auszustatten.

Um jedoch den Aufbau und die Funktionsweise des Fertigungssystems 10 so einfach wie möglich zu halten, ist es bevorzugt, daß notwendige Handhabungsoperationen, wie etwa Positionieren, Ausrichten, Verdrehen um eine erste Achse oder um eine zweite Achse, Verfahren innerhalb der Speicherablage in X- oder Y-Richtung mit Hilfe der Handhabungsportale 40, 42, 44, 46 durchgeführt werden können.

Wie beispielhaft anhand von Fig. 2 erläutert ist, könnten sich etwa unterhalb eines Logistikportals 34 drei Ablageplätze 48 befinden, die von einem auf dem Logistikportal 34 verfahrbaren Schlitten angefahren werden können. Dagegen sind beispielhaft weitere Ablageplätze 48 unterhalb des Handhabungsportals 40, sowie seitlich dazu dargestellt, die von einem darauf verfahrbaren Schlitten angefahren werden können, wobei gleichzeitig durch eine weitere Verfahrmöglichkeit in Y-Richtung sichergestellt ist, daß sämtliche Ablageplätze 48 innerhalb der Speicherablage 14 vom Handhabungsportal 40 aus angefahren werden können.

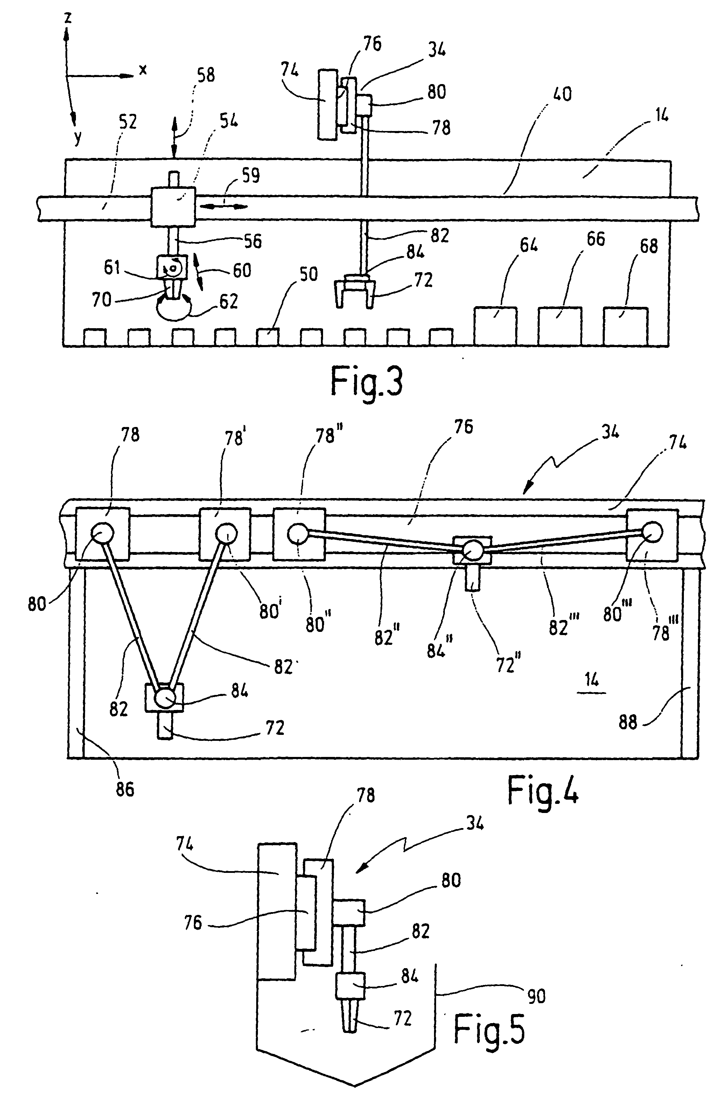

Dies ist im folgenden anhand von Fig. 3 näher erläutert, in der die Speicherablage 14 dargestellt ist.

Die Speicherablage 14 ist vorzugsweise nach außen berührungssicher durch einen umlaufenden Schutzzaun abgeschlossen, der nur mit Durchführungen an den jeweiligen Stirnflächen für den Schlitten 54 versehen ist, der, wie durch den Pfeil 59 angedeutet ist, entlang einer Führung 52 auf dem Handhabungsportal 40 verfahrbar ist. Dagegen kann das Logistikportal 34 etwa oberhalb der Speicherablage 14 verlaufen und nur bei Bedarf von oben aus Teile 50 aus der Speicherablage 14 entnehmen oder in diese ablegen.

An dem Schlitten 54, der auf der Führung 52 des Handhabungsportals 40 in Richtung des Doppelpfeiles 59 verfahrbar ist, ist entweder eine Führung 56 in Vertikalrichtung vorgesehen, an der eine Greifeinrichtung 70 in Vertikalrichtung verfahrbar festgelegt ist, oder aber es ist ein Schwenkarm (nicht dargestellt) vorgesehen, der um eine quer zur Erstreckungsrichtung 59 des Handhabungsportals 40 (in Y-Richtung) verlaufende Schwenkachse gesteuert verschwenkbar ist. Die Greifeinrichtung 70 ist im dargestellten Fall zusätzlich noch um eine Vertikalachse (Z-Achse) verdrehbar (vgl. Doppelpfeil 62), um eine weitere, dazu senkrechte Drehachse verdrehbar, wie durch den Pfeil 61 dargestellt ist, und schließlich noch in einer Richtung senkrecht zur Erstreckungsrichtung 59 (also in Y-Richtung) verfahrbar, wie durch den Doppelpfeil 60 angedeutet ist. Insgesamt kann somit die Greifeinrichtung 70 in drei Linearachsen (X, Y, Z) gesteuert verfahren werden und zusätzlich noch um zwei zueinander senkrecht stehende Drehachsen verschwenkt werden. Mittels der Greifeinrichtung 70 können somit Teile 50 an beliebigen Stellen innerhalb der Speicherablage 14 aufgenommen und abgesetzt werden und können zusätzlich noch um zwei Achsen verschwenkt werden.

Beispielhaft sind in Fig. 3 mit den Ziffern 64, 66, 68 drei Zusatzeinrichtungen angedeutet, wobei es sich z.B. um eine Wascheinrichtung, eine Abblaseinrichtung und eine Signiereinrichtung handeln kann. Diese Zusatzeinrichtungen 64, 66, 68 können gleichfalls mittels der Greifeinrichtung 70 angefahren werden, wobei keine zusätzliche Verfahreinrichtung innerhalb der jeweiligen Zusatzeinrichtung 64, 66, 68 notwendig ist.

Dagegen erlauben die in Y-Richtung verlaufenden Logistikportale lediglich ein Verfahren von Teilen 50 entlang der Logistikportale in Y-Richtung, sowie ein Bewegen der Teile in Vertikalrichtung (Z-Richtung) und ein Ergreifen bzw. Absetzen mit Hilfe einer Greifeinrichtung 72.

Wie aus Fig. 4 näher zu ersehen ist, sind dabei jeweils zwei benachbarte Schlitten 78, 78' bzw. 78'', 78''' über jeweils eine Gelenkverbindung 80, 80' bzw. 80'', 80''' und zwei verwindungssteife Streben 82, 82' bzw. 82'', 82''' mit einer weiteren Gelenkverbindung 84 bzw. 84'' gekoppelt, an der die Greifeinrichtung 72 bzw. 72'' aufgenommen ist.

Durch ein gesteuertes Verfahren der Schlitten 78, 78' bzw. 78'', 78''' auf der Horizontalführung 76 des Logistikportals 34 können somit Teile 50 in Erstreckungsrichtung des Logistikportals (Y-Richtung) verfahren werden und gleichzeitig in Vertikalrichtung (Z-Richtung) angehoben oder abgesetzt werden, wenn der Abstand zwischen den benachbarten Schlitten verändert wird.

Das betreffende Logistikportal 34 weist somit lediglich einen Horizontalträger 74 auf, der an einer irgendwie gearteten Vertikalverstrebung aufgenommen ist, wie durch die Streben 86 und 88 beispielhaft dargestellt ist, und auf dem eine Mehrzahl von Schlittenpaaren verfahrbar ist, die jeweils über ein Koppelgelenk miteinander verbunden sind.

Ein besonders einfacher Aufbau mit einer gleichzeitig äußerst schnellen Verfahrmöglichkeit und geringen bewegten Massen wird dadurch gewährleistet, daß die Schlitten 78, 78', 78'', 78''' als Läufer eines Direktantriebs ausgebildet sind, dessen Induktorkamm 76 am Horizontalträger 74 aufgenommen ist, wobei der Induktorkamm gleichzeitig als Horizontalführung ausgebildet ist (vgl. Fig. 5).

Diese Logistikportale können in ausreichender Höhe oberhalb der Bearbeitungsstationen S₁₁ bis S₃₉ verlaufen, um eine Zuführung und eine Entnahme von Teilen in die Bearbeitungsstationen von oben zu erlauben.

Entlang der Bereiche, über die lediglich ein Transport von Teilen in Erstreckungsrichtung der Logistikportale erfolgen soll, sind die Logistikportale vorzugsweise mit einer Auffangwanne 90 versehen, um von den Teilen herabtropfendes Kühlschmiermittel aufzufangen.

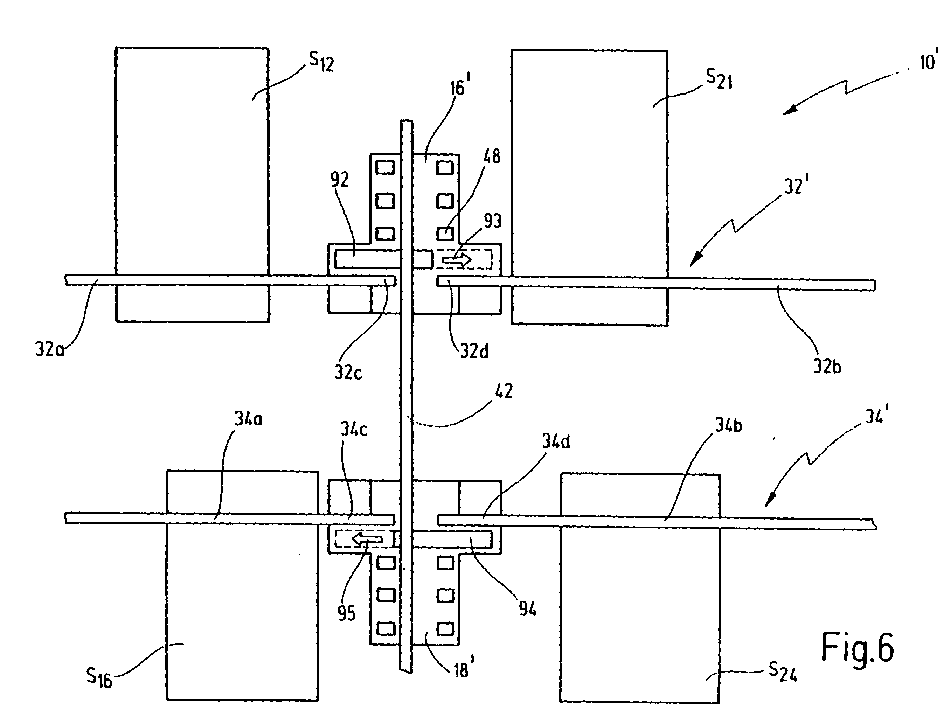

In Fig. 6 ist eine Abwandlung des Fertigungssystems gemäß Fig. 1 dargestellt und insgesamt mit der Ziffer 10' bezeichnet. Fig. 6 zeigt lediglich einen kleineren Ausschnitt des Fertigungssystems mit vier Bearbeitungsstationen S₁₂, S₁₆, S₂₁ und S₂₄. Die beiden Bearbeitungsstationen S₁₂ und S₁₆ können beispielsweise wie bei dem Fertigungssystem gemäß Fig. 1 für eine erste Bearbeitungsoperation ausgelegt sein, während die beiden Bearbeitungsstationen S₂₁ und S₂₄ für eine nachfolgende Bearbeitungsoperation ausgebildet sein können.

Die beiden Bearbeitungsstationen S₁₂ und S₂₁ werden durch ein Logistikportal 32' mit Teilen versorgt. Die beiden Bearbeitungsstationen S₁₆ und S₂₄ werden durch ein Logistikportal 34' mit Teilen versorgt.

Im Unterschied zu der Darstellung gemäß Fig. 1 sind die Logistikportale nicht durchgehend ausgeführt, sondern sind in eine Mehrzahl von Einzelabschnitten unterteilt, die jeweils in Speicherablagen enden. So weist das Logistikportal 32' einen Teilabschnitt 32a auf, der mit einem Endabschnitt 32c in der Speicherablage 16' endet, sowie einen Teilabschnitt 32b, der mit einem Endabschnitt 32d in der Speicherablage 16' gegenüber dem anderen Endabschnitt 32c endet.

In entsprechender Weise weist das Logistikportal 34' einen Einzelabschnitt 34a auf, der mit einem Endabschnitt 34c in einer Speicherablage 18' endet, sowie einen weiteren Einzelabschnitt 34b, der mit einem Endabschnitt 34d in der Speicherablage 18' gegenüber dem anderen Endabschnitt 34c endet.

Es versteht sich, daß die Logistikportale 32', 34' in entsprechender Weise jeweils mit weiteren Endabschnitten in Speicherablagen enden können und entsprechend der Größe des Gesamtsystems in weitere Einzelabschnitte aufgeteilt sein können.

Die beiden Speicherablagen 16', 18' sind durch das Handhabungsportal 42 wie bei der Ausführung gemäß Fig. 1 verbunden.

Zum Transport von Teilen zwischen den jeweiligen Endabschnitten 32c, 32d des Logistikportals 32' bzw. 34c, 34d des Logistikportals 34' ist jeweils ein Schieber 92 bzw. 94 vorgesehen.

Der Schieber 92 innerhalb der Speicherablage 16' befindet sich gemäß Fig. 6 in seiner linken Position, in der er zur Aufnahme eines Teils von einer Greifeinrichtung, die an einem auf dem Endabschnitt 32c befindlichen Schlitten gehalten ist, geeignet ist, sowie zur Aufnahme eines weiteren Teils unterhalb des Handhabungsportals 42. Der Schlitten 92 kann in Richtung des Pfeiles 93 nach rechts in die gestrichelt gezeichnete Position verfahren werden, so daß dann ein zunächst am linken Ende des Schiebers aufgenommenes Teil sich unterhalb des Handhabungsportals 42 befindet und ein Teil, das sich zuvor auf der rechten Seite des Schlittens 92 befand, nunmehr von einer Greifeinrichtung auf dem Endabschnitt 32d aufgenommen werden kann, um beispielsweise damit die Bearbeitungsstation S₂₁ zu versorgen. Anschließend kann der Schlitten 92 wieder in seine Ausgangsposition zurückgefahren werden.

In entsprechender Weise kann der Schlitten 94 innerhalb der Speicherablage 18' aus seiner auf der rechten Seite befindlichen Position, die ausgezogen dargestellt ist, in Richtung des Pfeiles 95 in die gestrichelt gezeichnete Position auf der linken Seite, und anschließend wieder zurückverfahren werden, wobei vorzugsweise wiederum gleichzeitig zwei Teile bewegt werden können.

Alle übrigen Handhabungsoperationen an den Teilen werden von auf dem Handhabungsportal 42 verfahrbaren Schlitten bzw. von daran aufgenommenen Greifeinrichtungen ausgeführt. Hierzu gehören beispielsweise ein Verschwenken der Teile, ein Reinigen der Teile, ein Signieren der Teile und ein Ablegen bzw. Aufnehmen der Teile an Ablageplätzen 48, die in Fig. 6 lediglich schematisch angedeutet sind. Bevorzugt ist hierbei an dem jeweiligen Schlitten des Handhabungsportals 42 ein Schwenkarm vorgesehen, an dem die jeweilige Greifeinrichtung in geeigneter Weise wiederum verschwenkbar und/oder verfahrbar aufgenommen ist. Durch die Verwendung von Schwenkarmen, die gesteuert verschwenkbar sind, wird die Bauhöhe in Vertikalrichtung reduziert, da auf eine Z-Achse verzichtet werden kann und Vertikalbewegungen als auch Bewegungen zwischen gegenüberliegenden Ablageplätzen 48 durch einen Schwenkarm, der aus mindestens zwei miteinander gekoppelten Schwingen besteht, ausgeführt werden können.

Es versteht sich, daß die Anzahl der auf den Logistikportalen und auf den Handhabungsportalen verfahrbaren Schlitten in Abhängigkeit von den jeweiligen Anforderungen des Fertigungssystems in geeigneter Weise festgelegt werden kann.

Es versteht sich ferner, daß die Darstellungen in den Figuren der Zeichnung rein schematisch sind und nicht maßstabsgerecht sein müssen.

## Patentansprüche

1. Verkettetes Fertigungssystem zur Durchführung von Bearbeitungsoperationen an Teilen (50), mit mindestens einer ersten Bearbeitungsstation (S₁₁, S₁₂, S₁₃, S₁₄, S₁₅, S₁₆) zur Durchführung einer ersten Bearbeitungsoperation, mit mindestens einer zweiten Bearbeitungsstation (S₂₁, S₂₂, S₂₃, S₂₄, S₂₅, S₂₆) zur Durchführung einer zweiten Bearbeitungsoperation, mit mindestens einem ersten Portal (32, 34, 36, 38, 39, 32', 34') (Logistikportal), das sich in einer ersten Richtung (Y-Richtung) erstreckt und mindestens eine erste (S₁₁-S₁₆) und eine zweite (S₂₁-S₁₆) Bearbeitungsstation miteinander koppelt, mit mindestens einem zweiten Portal (40, 42, 44, 46) (Handhabungsportal), das sich quer zur ersten Richtung in einer zweiten Richtung (X-Richtung) erstreckt und eine Mehrzahl der ersten (S₁₁-S₁₆) oder zweiten (S₂₁-S₂₆) Bearbeitungsstationen miteinander koppelt, wobei zumindest jedem Handhabungsportal (40, 42, 44, 46) eine Speicherablage (12, 14, 16, 18, 20, 22, 24, 26, 28, 30, 16', 18') mit mehreren Ablageplätzen (48) zur Aufnahme von Teilen (50) zugeordnet ist, wobei auf dem Handhabungsportal ein Schlitten (54) verfahrbar ist, der eine zumindest in Vertikalrichtung (Z-Richtung) verfahrbare Greifeinrichtung (70) aufweist, die zumindest eine zusätzliche Handhabungsoperation, wie etwa Verschieben in Y-Richtung oder Verdrehen, erlaubt, so dass die Ablageplätze (48) der Speicherablage vom Handhabungsportal angefahren werden können, und wobei auf dem Logistikportal (32, 34, 36, 38, 39, 32', 34') ein weiterer Schlitten (78, 78', 78'', 78''') verfahrbar ist, der mit einer Greifeinrichtung (72, 72'') zum Aufnehmen oder Ablegen von Teilen (50) zur Bewegung der Teile in Z-Richtung ausgebildet ist.

2. Fertigungssystem nach Anspruch 1, mit einer Mehrzahl von Handhabungsportalen (40, 42, 44, 46) und Logistikportalen (32, 34, 36, 38, 39, 32', 34'), die sich jeweils in Kreuzungspunkten (11, 13, 15, 17, 19, 21, 23, 25, 27, 29, 31, 33) miteinander kreuzen, wobei jedem Kreuzungspunkt (11, 13, 15, 17, 19, 21, 23, 25, 27, 29, 31, 33) eine Speicherablage (12, 14, 16, 18, 20, 22, 24, 26, 28, 30, 16', 18') zugeordnet ist.

3. Fertigungssystem nach Anspruch 1 oder 2, bei dem in den Speicherablagen (14) Zusatzeinrichtungen (64, 66, 68), wie etwa Reinigungseinrichtungen, Positioniereinrichtungen, Abblaseinrichtungen, Wascheinrichtungen, Signiereinrichtungen vorgesehen sind, mit denen die Greifeinrichtungen (70) an den Schlitten (54) der Handhabungsportale (40) zur Durchführung von Handhabungsoperationen zusammenwirken.

4. Fertigungssystem nach einem der vorhergehenden Ansprüche, bei dem die auf den Logistikportalen (32, 34, 36, 38, 39, 32', 34') verfahrbaren Schlitten (78, 78', 78'', 78''') und Greifeinrichtungen (72, 72'') lediglich zum Verfahren der Teile entlang der Logistikportale (32, 34, 36, 38, 39, 32', 34'), zur Bewegung der Teile (50) in Vertikalrichtung und zur Übergabe von Teilen ausgebildet sind.

5. Fertigungssystem nach einem der vorhergehenden Ansprüche, bei dem auf mindestens einem Logistikportal (32, 34, 36, 38, 39, 32', 34') eine Mehrzahl von gesteuert verfahrbaren Schlitten (78, 78', 78'', 78''') angeordnet ist, von denen zumindest zwei benachbarte Schlitten (78, 78', 78'', 78''') über Streben (82, 82', 82'', 82''') mit einer Gelenkverbindung (84, 84'') gekoppelt sind, an der die Greifeinrichtung (72, 72'') aufgenommen ist.

6. Fertigungssystem nach Anspruch 5, bei dem die Schlitten (78, 78', 78'', 78''') jeweils als Läufer eines Direktantriebs ausgebildet sind, dessen Induktorkamm an einem Logistikportal (32, 34, 36, 38, 39) vorgesehen ist.

7. Fertigungssystem nach Anspruch 5 oder 6, bei dem das Logistikportal (34) einen Horizontalträger (74) aufweist, an dem der Induktorkamm mit einer Führung (76) aufgenommen ist, auf dem die Schlitten (78, 78', 78'', 78''') geführt sind.

8. Fertigungssystem nach Anspruch 5, 6 oder 7, bei dem das Logistikportal (34) zumindest teilweise mit einer Auffangwanne für Flüssigkeiten (90) versehen ist.

9. Fertigungssystem nach einem der Ansprüche 2 bis 8, bei dem die Logistikportale (32', 34') in eine Mehrzahl von Einzelabschnitten (32a, 32b, 34a, 34b) unterteilt sind, die jeweils in den Speicherablagen (16', 18') enden, wobei innerhalb der Speicherablagen (16', 18') jeweils eine Transporteinrichtung (92, 94) zum Transport von Teilen (50) zwischen den jeweiligen Endabschnitten (32c, d, 34c, d) der Einzelabschnitte (32a, b, 34a, b) eines Logistikportals (32', 34') vorgesehen ist.

10. Fertigungssystem nach Anspruch 9, bei dem jeweils ein Schieber (92, 94) zum Transport von Teilen (50) zwischen den jeweiligen Endabschnitten (32c, d, 34c, d) innerhalb der Speicherablagen (16', 18') vorgesehen ist.

11. Fertigungssystem nach Anspruch 1, bei dem das Logistikportal (32, 34, 36, 38, 39, 32', 34') eine Horizontalführung (76) aufweist, die an einer Vertikalverstrebung (86, 88) aufgenommen ist und auf der eine Mehrzahl von Schlitten (78, 78', 78'', 78''') gesteuert verfahrbar ist, wobei zumindest zwei benachbarte Schlitten (78, 78', 78'', 78''') über Streben (82, 82', 82'', 82''') mit einer Gelenkverbindung (84, 84'') gekoppelt sind, an der eine Greifeinrichtung (72, 72'') zur Handhabung eines Teils (50) aufgenommen ist.

12. Fertigungssystem nach Anspruch 11, wobei die Schlitten (78, 78', 78'', 78''') als Läufer eines Direktantriebs ausgebildet sind, dessen Induktorkamm am Portal (34) vorgesehen ist.

13. Fertigungssystem nach Anspruch 11 oder 12, mit einem Horizontalträger (74), an dem der Induktorkamm mit einer Führung (76) aufgenommen ist, auf dem die Schlitten (78, 78', 78'', 78''') geführt sind.

14. Fertigungssystem nach Anspruch 11, 12 oder 13, das zumindest teilweise mit einer Auffangwanne (90) versehen ist.

## Claims

1. A linked manufacturing system for processing parts (50), comprising at least a first processing station (S₁₁, S₁₂, S₁₃, S₁₄, S₁₅, S₁₆) for performing a first processing operation, at least a second processing station (S₂₁, S₂₂, S₂₃, S₂₄, S₂₅, S₂₆) for performing a second processing operation, further comprising at least a first gantry (32, 34, 36, 38, 39, 32', 34') (logistics gantry) extending in a first direction (Y-direction) and coupling at least a first (S₁₁-S₁₆) and a second second (S₂₁-S₂₆) processing station, further comprising at least a second gantry (40, 42, 44, 46) (handling gantry) extending transversely to the first direction in a second direction (X-direction) and coupling a plurality of first (S₁₁-S₁₆) or second (S₂₁-S₂₆) processing stations, wherein a storage device (12, 14, 16, 18, 20, 22, 24, 26, 28, 30, 16', 18') having several storage places (48) for receiving parts (50) is assigned to at least each handling gantry (40, 42, 44, 46), wherein a slide (54) is displaceable on the handling gantries, the slide comprising a gripping device (70) displaceable at least in vertical direction (Z-direction) and allowing at least one additional handling operation, such as displacing in Y-direction or turning, so that the storage places (48) of the storage device are accessible by the handling gantry, and wherein an additional slide (78, 78', 78" , 78"') is displaceable along the logistics gantry, having a gripping device (72, 72") for lifting or placing of parts (50) for moving the parts in Z-direction.

2. The manufacturing system of claim 1, comprising a plurality of handling gantries (40, 42, 44, 46) and logistics gantries (32, 34, 36, 38, 39, 32', 34') crossing each other at crossing points (11, 13, 15, 17, 19, 21, 23, 25, 27, 29, 31, 33), wherein a storage device is assigned to each crossing point (11, 13, 15, 17, 19, 21, 23, 25, 27, 29, 31, 33).

3. The manufacturing system of claim 1 or 2, wherein in each storage device additional devices (64, 66, 68) such as cleaning devices, positioning devices, blowing devices, washing devices, marking devices are provided which cooperate with the gripping devices (70) on the slides (54) of the handling gantries for performing handling operations.

4. The manufacturing system of any of the preceding claims, wherein the slides (78, 78', 78'', 78''') and gripping devices (72, 72'') displaceable on the logistics gantries (32, 34, 36, 38, 39, 32', 34') are adapted only for displacing parts along the logistics gantries (32, 34, 36, 38, 39, 32', 34'), for moving parts vertically and for transferring parts.

5. The manufacturing system of any of the preceding claims, wherein on at least one logistics gantry (32, 34, 36, 38, 39, 32', 34') a plurality of controllably displaceable slides (78, 78', 78'', 78''') is arranged, at least two adjacent ones of which are linked via braces (82, 82', 82'', 82''') with an articulated joint (84, 84''), whereon the gripping device (72, 72'') is received.

6. The manufacturing system of claim 5, wherein each slide (78, 78', 78'', 78''') is configured as a traveller of a direct drive the inductor rail of which is provided at a logistics gantry (32, 34, 36, 38, 39).

7. The manufacturing system of claim 5 or 6, wherein wherein the logistics gantry (34) comprises a horizontal beam on which the inductor rail including a guidance (76) is supported for guiding the slides (78, 78', 78'', 78''').

8. The manufacturing system of claim 5, 6 or 7, wherein the logistics gantry (34) at least partially is configured with as drip pan (90) for collecting liquids.

9. The manufacturing system of any one of claims 2 to 8, wherein the logistics gantries (32', 34') are devided into a plurality of single sections (32a, 32b, 34a, 34b) each ending in a storage device (16', 18'), wherein in each storage device (16', 18') a transfer means (92, 94) is provided for transferring parts (50) between the respective end sections (32c, d, 34c, d) of the single sections (32a, 32b, 34a, 34b) of a logistics gantry (32', 34').

10. The manufacturing system of claim 9, wherein in each storage device (16', 18') a slider (92, 94) is provided for transferring parts (50) between the respective end sections (32c, d, 34c, d).

11. The manufacturing system of claim 1, wherein the logistics gantry (32, 34, 36, 38, 39, 32', 34') comprises a horizontal guidance (76) which is supported on a vertical bracing (86, 88) and along which a plurality of slides (78, 78', 78'', 78''') are controllably displaceable, wherein at least two adjacent slides (78, 78', 78", 78''') are linked via struts to an articulated joint (84, 84''), whereon a gripping device (72, 72") for handling a part (50) is received.

12. The manufacturing system of claim 11, wherein the slides (78, 78', 78" , 78"') are configured as travellers of a direct drive the inductor rail of which is provided on the gantry (34).

13. The manufacturing system of claim 11 or 12, comprising a horizontal beam (74) on which the inductor rail including a guidance (76) is supported for guiding the slides (78, 78', 78'', 78''').

14. The manufacturing system of any of claims 11, 12 or 13, which at least partially is configured with a drip pan (90).

## Revendications

1. Système de fabrication enchaîné pour la réalisation d'opérations de traitement de pièces (50), avec au moins un premier poste de traitement (S₁₁, S₁₂, S₁₃, S₁₄, S₁₅, S₁₆) pour la réalisation d'une première opération de traitement, avec au moins un deuxième poste de traitement (S₂₁, S₂₂, S₂₃, S₂₄, S₂₅, S₂₆) pour la réalisation d'une deuxième opération de traitement, avec au moins un premier portique (32, 34, 36, 38, 39, 32', 34') (portique de logistique) qui s'étend dans une première direction (direction Y) et qui relie au moins un premier poste de traitement (S₁₁ - S₁₆) et un deuxième poste de traitement (S₂₁ - S₂₆), avec au moins un deuxième portique (40, 42, 44, 46) (portique de manutention) qui s'étend perpendiculairement à la première direction dans une deuxième direction (direction X) et qui relie une pluralité des premiers postes de traitement (S₁₁ - S₁₆) ou des deuxièmes postes de traitement (S₂₁ - S₂₆) les uns aux autres, un dépôt de stockage (12, 14, 16, 18, 20, 22, 24, 26, 28, 30, 16', 18') avec plusieurs emplacements de dépôt (48) pour la réception de pièces (50) étant associé à au moins chaque portique de manutention (40, 42, 44, 46), un chariot (54) étant déplaçable sur le portique de manutention, lequel chariot comporte un dispositif de prise (70) déplaçable au moins dans la direction verticale (direction Z) qui permet au moins une opération de manutention supplémentaire, comme par exemple le déplacement ou le décalage dans la direction Y, de sorte que les emplacements de dépôt (48) du dépôt de stockage peuvent être mis en mouvement par le portique de manutention, et un autre chariot (78, 78', 78", 78"') étant déplaçable sur le portique de logistique (32, 34, 36, 38, 39, 32', 34'), lequel chariot est pourvu d'un dispositif de prise (72, 72") pour la prise ou le dépôt de pièces (50) pour déplacer les pièces dans la direction Z.

2. Système de fabrication selon la revendication 1, avec une pluralité de portiques de manutention (40, 42, 44, 46) et de portiques de logistique (32, 34, 36, 38, 39, 32', 34') qui se croisent en des points de croisement (11, 13, 15, 17, 19, 21, 23, 25, 27, 29, 31, 33), un dépôt de stockage (12, 14, 16, 18, 20, 22, 24, 26, 28, 30, 16', 18') étant associé à chaque point de croisement (11, 13, 15, 17, 19, 21, 23, 25, 27, 29, 31, 33).

3. Système de fabrication selon la revendication 1 ou 2, dans lequel des dispositifs additionnels (64, 66, 68), comme par exemple des dispositifs de nettoyage, des dispositifs de positionnement, des dispositifs de purge, des dispositifs de lavage, des dispositifs de marquage, sont prévus dans les dépôt de stockage (14), avec lesquels les dispositifs de prise (70) coopèrent sur les chariots (54) des portiques de manutention (40) pour la réalisation des opérations de manutention.

4. Système de fabrication selon l'une quelconque des revendications précédentes, dans lequel les chariots (78, 78', 78", 78"') déplaçables sur les portiques de logistique (32, 34, 36, 38, 39, 32', 34') et les dispositifs de prise (72, 72") sont prévus simplement pour le déplacement des pièces le long des portiques de logistique (32, 34, 36, 38, 39, 32', 34') pour déplacer les pièces (50) dans la direction verticale et pour transférer les pièces.

5. Système de fabrication selon l'une quelconque des revendications précédentes, dans lequel une pluralité de chariots à déplacement commandé (78, 78', 78", 78"') est disposée sur au moins un portique de logistique (32, 34, 36, 38, 39, 32', 34'), parmi lesquels au moins deux chariots adjacents (78, 78', 78", 78"') sont reliés par des entretoises (82, 82', 82", 82"') à un assemblage articulé (84, 84") dans lequel est logé le dispositif de prise (72, 72").

6. Système de fabrication selon la revendication 5, dans lequel les chariots (78, 78', 78", 78"') sont conçus chacun comme rotor d'un entraînement direct dont le peigne d'inducteur est prévu sur un portique de logistique (32, 34, 36, 38, 39).

7. Système de fabrication selon la revendication 5 ou 6, dans lequel le portique de logistique (34) comporte un support horizontal (74) sur lequel le peigne d'inducteur est logé avec une glissière de guidage (76) sur lequel les chariots (78, 78', 78", 78"') sont guidés.

8. Système de fabrication selon la revendication 5, 6 ou 7, dans lequel le portique de logistique (34) est muni au moins partiellement d'une cuve collectrice de liquides (90).

9. Système de fabrication selon l'une quelconque des revendications 2 à 8, dans lequel les portiques de logistique (32', 34') sont divisés en une pluralité de segments individuels (32a, 32b, 34a, 34b) qui se terminent chacun dans les dépôts de stockage (16', 18'), un dispositif de transport (92, 94) étant prévu à l'intérieur des dépôts de stockage (16', 18') pour le transport des pièces (50) entre les segments d'extrémité respectifs (32c, d, 34c, d) des segments individuels (32a, b, 34a, b) d'un portique de logistique (32', 34').

10. Système de fabrication selon la revendication 9, dans lequel un coulisseau (92, 94) est prévu pour le transport des pièces (50) entre les segments d'extrémité respectifs (32c, d, 34c, d) à l'intérieur des dépôts de stockage (16', 18').

11. Système de fabrication selon la revendication 1, dans lequel le portique de logistique (32, 34, 36, 38, 39, 32', 34') comporte une glissière de guidage horizontale (76) qui est logée dans un entretoisement vertical (86, 88) et sur laquelle une pluralité de chariots (78, 78', 78", 78"') peut effectuer un déplacement commandé, au moins deux chariots adjacents (78, 78', 78", 78"') étant reliés par des entretoises (82, 82', 82", 82"') à un assemblage articulé (84, 84") dans lequel est logé un dispositif de prise (72, 72") pour la manutention d'une pièce (50).

12. Système de fabrication selon la revendication 11, dans lequel les chariots (78, 78', 78", 78"') sont conçus comme rotor d'un entraînement direct dont le peigne d'inducteur est prévu sur le portique (34).

13. Système de fabrication selon la revendication 11 ou 12, avec un support horizontal (74) sur lequel le peigne d'inducteur est logé avec une glissière de guidage (76) sur lequel les chariots (78, 78', 78", 78"') sont guidés.

14. Système de fabrication selon la revendication 11, 12 ou 13, qui est muni au moins partiellement d'une cuve collectrice (90).
